# FASCICULE DE BREVET EUROPEEN

(11) **EP 1 274 902 B1**
(45) Date de publication et mention de la délivrance du brevet: **16.12.2009**
(21) Numéro de dépôt: 01921514.4
(22) Date de dépôt: 06.04.2001
(51) Int. Cl.: E02B 3/04, A01K 61/00

(54) **RECIFS ARTIFICIELS MODULAIRES**
MODULARE KÜNSTLICHE RIFFANLAGE
MODULAR ARTIFICIAL REEFS

(30) Priorité: 07.04.2000 FR 0004522
(43) Date de publication de la demande: 15.01.2003
(73) Titulaire: Clamagirand, Etienne, 13001 Marseille (FR)
(72) Inventeur: Clamagirand, Etienne, 13001 Marseille (FR)
(74) Mandataire: Somnier, Jean-Louis
(86) Numéro de dépôt international: PCT/FR2001/001060
(87) Numéro de publication internationale: WO 2001/077443

(56) Documents cités:
- FR-A- 2 737 082
- US-A- 4 316 431
- US-A- 4 508 057
- US-A- 5 071 285

## Description

La présente invention a pour objet des récifs artificiels modulaires destinés à être mis en place sous l'eau pour créer des habitats pour différentes espèces de poissons.

Les récifs artificiels mis en place aujourd'hui sont :
- soit des éléments fabriqués hors de l'eau, étudiés pour comporter une forme et des ouvertures adaptées aux poissons, puis ces éléments sont mis en place tels qu'ils sont,
- soit des amoncellements, en vrac, dans l'eau de pièces simples comme des rochers, des cubes ou des poteaux (généralement de récupération).

Ils existent certains récifs faits de plaques de béton ajourées qui sont ensuite assemblées dans l'eau, mais soit ils ne sont pas conçus pour les superpositions, et donc ne permettent pas facilement la réalisation de grands ensembles à la fois esthétiques et de hauteurs variables, soit ils sont constitués de modules superposables mais alors difficiles et compliqués à mettre en oeuvre par plongeur avec des moyens de levage simples, de plus ils ne permettent pas de toute façon de constituer de véritables abris pour les poissons.

On connaît en effet à titre d'exemple le brevet US 4 316431 de Monsieur KOICHI KIMURA qui décrit des récifs formés par l'assemblage à l'aide de tiges boulonnées qui les traversent de deux types de modules préfabriqués : les uns sont superposés pour constituer des assemblages verticaux et les autres, permettant de relier ces dits assemblages verticaux, sont constitués par des barres d'interconnexions horizontales dans des directions perpendiculaires les unes aux autres ; les modules des assemblages verticaux sont de section en forme de T dont les âmes centrales forment des parois verticales et les semelles constituent des parois horizontales ; ces modules de petite dimension sont orientés de manière décalé les uns par rapport aux autres et disposés deux par deux en tête bêche ; chaque récif ainsi constitué est donc très complexe et ne peut être mis en oeuvre que par des moyens lourds. De plus l'objet de cette invention est de laisser beaucoup d'espaces entre les divers assemblages pour que le soleil qui y pénètre puisse activer la photosynthèse, l'objectif étant essentiellement le développement des algues et du plancton.

On pourrait également citer la demande de brevet FR 2 737082 de Monsieur Jean-Yves MARINARO décrivant un dispositif de récif artificiel destiné à créer un habitat pour les populations de poissons : un ensemble de dalles horizontales, ayant des perforations permettant le passage des poissons, sont assemblées les unes au-dessus des autres par des barres de maintien verticales mais sans module à parois verticales comme dans le document US analysé précédemment ; en effet l'objectif est de diminuer l'effet de la résistance à la houle et de permettre un balayage efficace des dalles par les courants marins.

On connait également la demande de brevet US 5 071285 de Monsieur VAN DOREN qui décrit un récif artifiel composté de deux types de modules assemblés les uns sur les autres à l'aide des barres verticales cimenteés, un premier type de module étant constitué d'une plaque destinée à être horizontale, un second type de module étant destiné à être disposé verticalement avec au moins un autre élément vertical, entre deux plaques horizontales, en laissant entre eux une ouverture, les barres verticales tranversant les deux types de modules dans lesquels elles sont cimentées.

On constate cependant que de tels récifs, ainsi que tous les récifs artificiels connus, ne sont pas entièrement satisfaisants pour améliorer à la fois la richesse d'un site en faune et flore diverses, principalement les poissons, et la beauté du site, pour les humains qui peuvent le voir, donc principalement les plongeurs.

L'objectif premier de l'invention est de permettre à des plongeurs, professionnels ou amateurs, de construire sous l'eau, sur le site de leur implantation définitive, des ensembles esthétiques de récifs plus ou moins complexes, privilégiant les développements verticaux.

Ces récifs doivent permettre aux poissons du site considérée de se cacher des prédateurs et de s'abriter des courants. Ils doivent constituer des caches pour les poissons que l'on vent ainsi protéger.

Lesdits récifs artificiels doivent posséder une forme qui permettent de les juxtaposer les uns à côté des autres de sorte qu'ils peuvent couvrir une surface en plan ; ces formes doivent être simples pour réduire le coût de fabrication et simplifier leur installation par plongeurs tout en répondant aux objectifs précédents.

De tels objectifs sont atteints par des récifs artificiels, destinés à être mis en place sous l'eau, et composés de deux types de modules préfabriqués assemblés les uns sur les autres à l'aide d'au moins une barre verticale : un premier type de module est constitué d'une plaque destinée à être horizontale, et un second type de module est constitué d'un élément de paroi destiné à être disposé verticalement, avec au moins un autre élément de paroi verticale entre deux plaques horizontales, en laissant entre eux au moins une ouverture apte à laisser le passage pour au moins un type de poisson donné, le tout étant solidarisé par au moins un tirant vertical traversant seulement les plaques horizontales et mettant l'ensemble en compression.

Chaque plaque comporte sur au moins la face destinée à être horizontale et tournée vers le haut au moins une protubérance ou un évidement, dont les formes sont compatibles avec celles portées par les modules d'éléments de parois verticaux et qui sont aptes à s'emboîter les unes dans les autres.

Chaque plaque destinée à être horizontale peut comprendre au moins un logement sur une de ses faces latérales périphériques, dans lequel est disposé un axe apte à recevoir l'extrémité d'un anneau amovible coulissant le long d'un câble guide extérieur pour faciliter sa mise en place ; le tirant d'assemblage vertical passant quant à lui par un trou de préférence au centre de chaque plaque.

Le résultat est de nouveaux types de récifs artificiels destinés à être mis en place sous l'eau suivant un procédé de mise en oeuvre assez simple tel que décrit à la fin de la présente description.

Certains ensembles d'éléments peuvent être assemblés à l'air libre et immergés sur le site.

Ces ensembles sont, à l'image de nos villes modernes, des juxtapositions sur le fond de la mer de constructions linéaires verticales comme des tours. La planche 3 montre un exemple d'un tel ensemble. Chacune de ces constructions verticales ou tour est construite par l'assemblage vertical les uns aux autres d'étages. Ceux-ci, constituées par des plaques horizontales pleines pour la plupart, sauf pour certaines qui peuvent comporter une ouverture verticale pour laisser le passage aux poissons, assurant la fonction de plancher et de plafond, séparés et fermés partiellement par des cloisons verticales, forment des caches pour les poissons ; et lesdits éléments de parois verticales, qui constituent également les entretoises maintenant les plaques horizontales, sont de section rectangulaires et forment des cloisons ou murs pour constituer des abris contre le courant ou les prédateurs.

L'ensemble des modules, aptes à former des récifs artificiels suivant l'invention, sont ainsi de formes très simples dont les dimensions permettent la mise à oeuvre par plongeurs avec des moyens de levage léger, permettent une construction sous l'eau sur le site de leurs implantions définitives et forment des ensembles esthétiques pouvant être plus ou moins complexes.

On pourrait citer d'autres avantages à la présente invention mais ceux cités ci-dessus en montrent déjà suffisamment pour en prouver la nouveauté et l'intérêt. La description et les dessins ci-après représentent un exemple de réalisation de l'invention mais n'ont aucun caractère limitatif : d'autres réalisations sont possibles dans le cadre de la portée et de l'étendue de cette invention en particulier en changeant la disposition et la forme des modules horizontaux et verticaux.
- Les figures 1 représentent un module de premier type destiné à être horizontal, d'une part en vue de dessus et d'autre part en vue de profil.
- Les figures 2 représentent un module de second type destiné à être disposé verticalement, d'une part en vue de dessus et d'autre part en vue latérale.
- La figure 3 représente une vue de dessus et une vue latérale d'un anneau amovible reliant une plaque horizontale à une ligne guide verticale.
- La figure 4 montre un éclaté d'un dispositif d'assemblage d'un récif artificiel suivant l'invention constitué de deux plaques horizontales et de trois modules verticaux.
- La figure 5 représente un récif artificiel suivant l'invention composé d'un assemblage de six plaques horizontales reliées par quatre tirant et câbles guides verticaux dont le tirant est placé au centre.

Toute la construction est faite à partir de deux types de modules simples : des modules destinés à être horizontaux, que l'on peut appeler «plateaux» 1 ou plaques,

Des modules destinés à être verticaux, que l'on peut appeler « entretoises » 2 qui constituent également des éléments de parois ou cloisons.

Une tour peut être à un seul étage. Elle est alors constituée d'un plateau 1 posé sur le fond de la mer et calé horizontalement, sur lequel sont fixés au moins deux entretoises 2 sur lesquelles est posé et fixé un second module plateau. Au moins un tirant 3, qui peut être en acier, placé verticalement, permet de relier les deux plateaux l'un à l'autre de préférence en leur centre.

Un module horizontal est une plaque épaisse faite en béton, de préférence marin ou tout autre matériau adéquat, limité par un contour qui peut être rectangulaire, triangulaire, mais sera de préférence hexagonal : les faces principales des plaques 1 destinées à être horizontales, sont planes et pleines, certaines pouvant comporter une ouverture verticale apte à laisser le passage pour au moins un type de poisson donné.

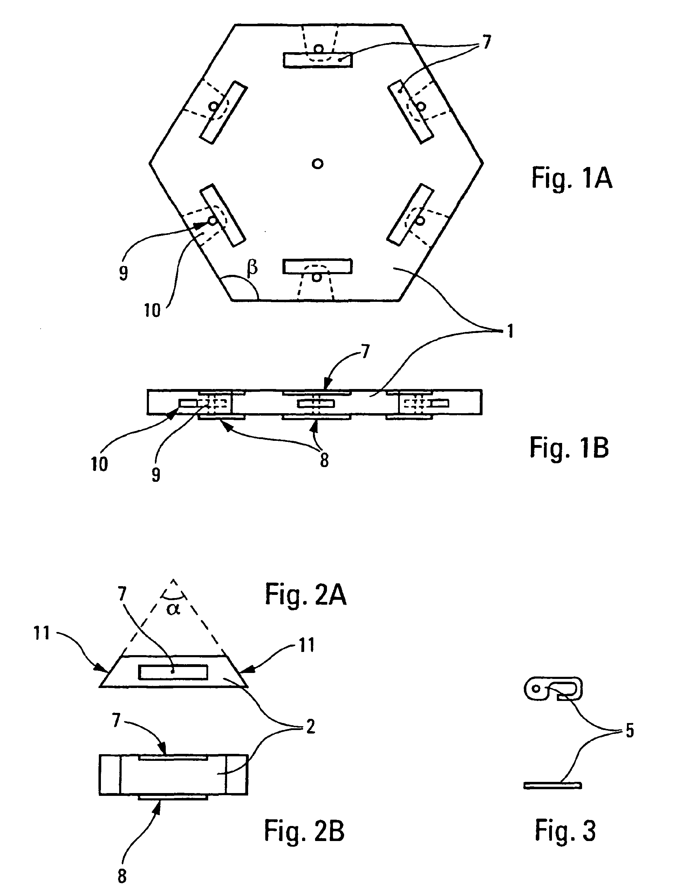

La figure 1 montre un exemple de ce que peut être un module « plateau » ou plaque.

Il comporte pour chacun de ses cotés soit six dans le présent exemple et sur sa face tournée vers le haut un évidement 7 (mais ce pourrait être une protubérance), qui permet d'emboîter un module « entretoise » 2.

D'autres évidements 7 peuvent être disposés entre le centre et la périphérie de la plaque pour disposer d'autres modules « entretoises » 2 afin de cloisonner davantage ou différemment l'espace séparant deux plaques horizontales

De préférence la face inférieure tournée vers le bas des plaques 1 ne comporte ni protubérance ni évidement afin de pouvoir les orienter suivant toute direction les unes par rapport aux autres autour de leur centre et d'améliorer ainsi l'esthétique des tours, évitant d'avoir les angles de l'ensemble des plaques horizontales alignés verticalement : les modules « entretoises » 2 sont alors immobilisés uniquement à leurs extrémités inférieurs et reçoivent en simple appui un module plaque 1 sur leurs extrémités supérieures, laquelle plaque peut être alors disposée suivant toutes orientations.

Chaque module du premier type 1, ou plaque, dit horizontal peut être traversé par un ou des trous verticaux, permettant chacun le passage d'un tirant 3 et la mise en tension d'un assemblage par l'intermédiaire de ces tirants. Ceux-ci sont des tubes ou joncs en aciers ou tout autre matériau adapté.

Un module ou élément vertical est une brique épaisse faite en béton, de préférence marin, ou en tout autre matériau adéquat, et dont les faces principales destinées à être verticales sont de préférence pleines : chacun de ces modules est limité par un contour qui sera de préférence rectangulaire et de forme allongée, avec de préférence deux faces parallèles qui seront les faces en contact avec les modules horizontaux 1.

De préférence ses deux faces d'extrémités sont inclinées l'une par rapport à l'autre d'un angle α tel que deux modules 2 disposés dans le prolongement l'un de l'autre et dont les faces d'extrémités 11 sont accolées, forment un angle de (180-α°) entre eux ; ledit angle (180-α°) peut être égal à l'angle P formé par deux côtés adjacents d'un module de plaque 1 horizontale.

Ainsi ces modules peuvent être assemblés sur le site dans la mer par superposition d'au moins deux modules horizontaux 1 enserrant au moins deux modules verticaux 2, le tout étant solidarisé par au moins un tirant vertical 3 mettant l'ensemble en compression, la superposition de plusieurs assemblages permettant de créer une tour.

Dans une solution préférentielle, chaque module du second type 2 dit vertical a la forme d'une brique comportant sur une face un évidement 7 et sur une face opposée une protubérance 8 d'une forme complémentaire sensiblement égale à l'évidement : il est ainsi possible de superposer plusieurs de ces modules « entretoises » 2 l'un au-dessus des autres par emboîtement et d'augmenter ainsi l'espace entre les modules plaques horizontales 1.

Selon un montage préférentiel, une tige ou tirant d'assemblage 3 vertical, traverse en son centre chaque module dit horizontal 1 et des câbles ou lignes guides d'assistance à l'installation 6, situés à l'extérieur des modules horizontaux, y sont reliés par des anneaux amovibles 5 horizontaux : ceux-ci coulissent par une de l'extrémité formant un anneau fermé le long des lignes guides 6 et l'autre extrémité formant un crochet peut être glissée dans des logements 10 disposés à la périphérie des plaques 1 à l'intérieur desquels sont fixées des axes 9 aptes à recevoir lesdits crochets.

Selon un premier montage, chaque tige d'assemblage 3 verticale, peut être fixée à chaque module dit horizontal 1 par une goupille horizontale qui la traverse et selon un autre montage ladite tige ou tirant d'assemblage est filetée et traverse au moins un premier module dit horizontal 1 auquel elle est fixée par un boulon 4₁, et un second module dit horizontal 1 auquel elle est également fixée par un boulon 4₂.

Deux modules dits horizontaux 1 deviennent solidaires l'un à l'autre par l'intermédiaire d'au moins deux modules verticaux 2, auxquels ils sont directement solidarisés par l'emboîtement vertical de protubérances 8 dans des évidements horizontaux 7 au moins sur la face supérieure du module horizontal inférieur ; chaque tige 3 d'assemblage verticale, traverse au moins les deux modules horizontaux auxquels elle est fixée, et sa mise sous tension immobilise ces modules les uns contre les autres même si le module supérieur horizontal est simplement posé sur les modules « entretoises » inférieurs 2.

Dans notre modèle cité en exemple, les dimensions sont environ les suivantes :
- Diamètre du plateau : 200 cm
- Epaisseur du plateau : 16 cm
- Hauteur des entretoises : 24 cm
- Epaisseur des entretoises : 20 cm
- Longueur des entretoises : 70 cm
- Diamètre du tirant en acier : 50 mm

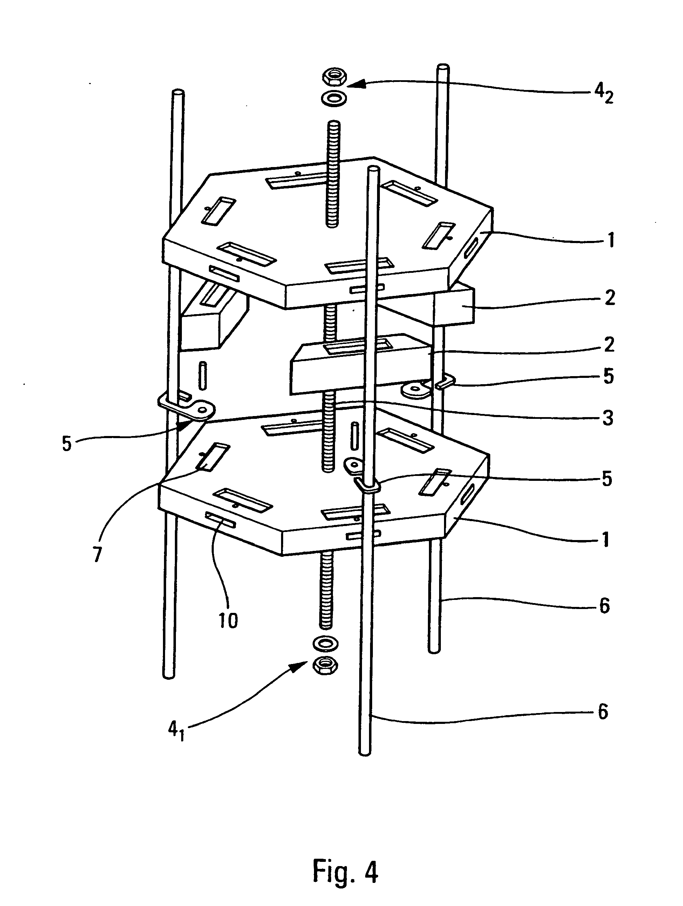

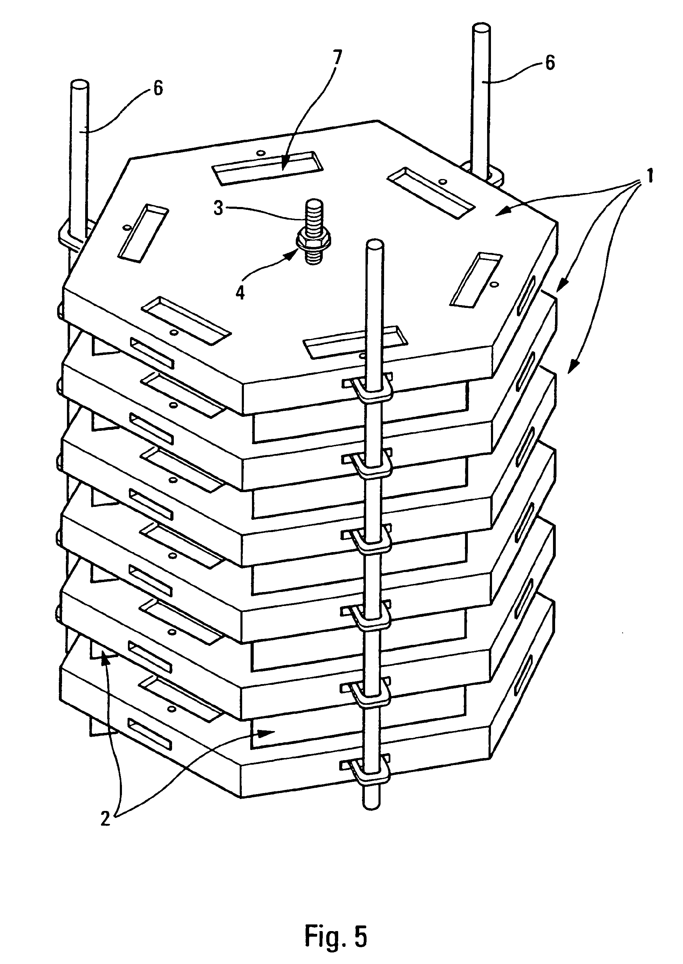

Selon l'invention, le montage et l'assemblage se font par un procédé adapté à la conception des modules et qui peut comporter les phases suivantes :
- On dispose au dessus du site d'une barge équipée d'une grue et des plongeurs se mettent à l'eau pour la mise en place des modules préfabriqués tels que décrit précédemment et suivant le mode opératoire ci-après.
- On dispose sur le fond du site que l'on veut équiper avec ledit récif artificiel au moins un câble 6 dont une extrémité est ancrée sur ledit fond, et de préférence au moins deux si ce n'est trois comme représenté sur les figures 3 et 4 pour former des lignes guides externes.
- On relie les cotés du premier plateau ou plaque 1 par l'intermédiaire d'anneaux amovibles 5 aux lignes guides 6 et on immerge ce premier module 1 constitué d'une plaque disposée horizontalement et apte à coulisser verticalement par rapport aux dits câbles 6.
- On place au fond de l'eau ce premier module plateau ou plaque 1 calé horizontalement.
- On fixe un câble guide central en acier 3, qui est mis en attente, en le vissant dans le trou central
- On dispose verticalement dans les cavités utiles 7 (ou inversement sur des protubérances 8) réalisées au moins sur la face supérieure de ladite plaque 1 au moins deux modules 2 de second type et de préférence trois tels que représentés sur les figures, constitués chacun d'un élément de paroi et comportant sur chacune de leurs faces horizontales au moins une protubérance 8 (ou réciproquement un évidement 7) compatible avec un évidement 7 (ou réciproquement une protubérance 8) de ladite plaque 1.
- Un deuxième plateau ou plaque 1 est relié en surface aux guides lignes 6 et on fait coulisser cette deuxième plaque 1 le long de ces câbles.
- On immerge et on laisse descendre avec la grue ce deuxième module 1 qui est guidé par les câbles, et s'enfile sur le câble 3 en attente qui le guide jusqu'à sa place définitive, les plongeurs vérifient qu'il vient bien s'appuyer sur les éléments 2 de parois mis en place précédemment et formant entretoises au-dessus de la plaque précédente, cette deuxième plaque comportant également sur au moins sa face horizontale supérieure des protubérances 8 ou des évidements 7 compatibles avec ceux d'autres éléments de parois 2 suivants.
- On installe sur cette deuxième plaque d'autres entretoises 2 avec la même méthode, trois entretoises dans notre exemple sur six possible, laissant de larges ouvertures pour la circulation des poissons tout en protégeant suffisamment l'espace intérieur contre les courants ou les prédateurs.
- On place ensuite un troisième module plateau ou plaque 1 par une méthode similaire : celui-ci sera guidé par les lignes guides 6 externes, trois dans notre exemple, qui sont fixées et tendues verticalement.
- On continue la mise en place successivement d'éléments de parois verticales 2 et plaques horizontales 1 les uns sur les autres jusqu'à constituer la hauteur du récif artificiel voulue avec par exemple six modules de premier type ou plaques horizontales telles que représentées sur la figure 5.
- On arrête au moins un câble guide 3,6 à la hauteur ainsi réalisée, on met ce câble 3,6 sous tension tel que par un boulon par exemple, pour constituer un tirant 3 solidarisant ainsi l'ensemble du récif constitué.
- On peut alors enlever les câbles guides 6 en décrochant les anneaux amovibles 5 des plaques ou plateaux horizontales 1.

La figure 4 montre en éclaté le dispositif d'assemblage sur le site.

La figure 5 représente un assemblage de six plateaux ou plaques 1. Certaines tours, destinées à un usage particulier, peuvent être construites avec des modules différents des modules de base : il est ainsi possible de réaliser une tour dite « repos de plongeurs » : elle comporte en bas un premier module plancher normal sur lequel s'appuient trois modules verticaux particuliers dits modules piliers qui supportent un plateau horizontal particulier en ce sens qu'il compote en son centre une grande ouverture par laquelle peut passer un plongeur. Cette tour à l'étage haut peut être surmonté d'un dôme en plastique qui, rendu étanche peut être rempli d'air pour que des plongeurs puissent y maintenir leur tête et y respirer. Le dôme sera équipé d'un bouchon en son centre qui permet de vider l'air prisonnier du dôme.

## Revendications

1. Récif artificiel, destiné à être mis en place sous l'eau, composé de deux types de modules préfabriqués (1,2) assemblés les uns sur les autres à l'aide d'au moins une barre verticale (3,6), un premier type (1) de module étant constitué d'une plaque, destinée à être horizontale, et un second type (2) de module étant constitué d'un élément de paroi, destiné à être disposé verticalement, avec au moins un autre élément de paroi verticale, entre deux plaques horizontales (1), en laissant entre eux au moins une ouverture apte à laisser le passage pour au moins un type de poisson donné, le tout étant solidarisé par au moins un tirant vertical (3) traversant seulement les plaques horizontales et mettant l'ensemble en compression.

2. Récif artificiel suivant la revendication 1 **caractérisé en ce que** les faces principales destinées à être horizontales des plaques (1) sont planes et pleines, certaines pouvant comporter une ouverture verticale apte à laisser le passage pour au moins un type de poisson donné.

3. Récif artificiel suivant les revendications 1 ou 2 **caractérisé en ce que** les plaques (1) ont un pourtour hexagonal.

4. Récif artificiel suivant l'une quelconque des revendications 1 à 3 **caractérisé en ce que** chaque plaque (1) comporte sur au moins la face destinée à être horizontale et tournée vers le haut au moins une protubérance (8) ou un évidement (7), dont les formes sont compatibles avec celles portées par les modules d'élément de paroi (1) et qui sont aptes à s'emboîter les unes dans les autres.

5. Récif artificiel suivant l'une quelconque des revendications 1 à 4 **caractérisé en ce que** chaque plaque destinée à être horizontale (1) comprend au moins un trou vertical permettant le passage d'un tirant (3).

6. Récif artificiel suivant l'une quelconque des revendications 1 à 5 **caractérisé en ce que** chaque plaque destinée à être horizontale (1) comprend au moins un logement (10) sur une de ses faces latérales périphériques, dans lequel est disposé un axe (9) apte à recevoir l'extrémité d'un anneau amovible dont l'autre extrémité est apte à coulisser le long d'une ligne guide (6).

7. Récif artificiel suivant l'une quelconque des revendications 1 à 6.**caractérisé en ce que** les éléments verticaux (2) sont de section rectangulaire et de forme allongée dont les deux faces d'extrémités sont inclinés l'une par rapport à l'autre d'un angle (α) tel que deux éléments (2) disposés dans le prolongement l'un de l'autre et dont les faces d'extrémités (11) sont accolées forment un angle de (180-α°) entre eux.

8. Récif artificiel suivant la revendication 7 **caractérisé en ce que** l'angle (180-α) est égal à l'angle β formé par deux côtés adjacents d'une plaque horizontale (1).

9. Récif artificiel suivant l'une quelconque des revendications 1 à 8 **caractérisé en ce que** les faces principales destinées à être verticales des éléments verticaux (2) sont pleines.

10. Procédé d'installation sous-marine d'un récif artificiel composé de deux types de modules préfabriqués (1,2) aptes à être assemblés les uns sur les autres à l'aide d'au moins un tirant vertical (3,6) **caractérisé en ce que** :
- on dispose sur le fond du site que l'on veut équiper avec ledit récif artificiel au moins un câble (6) dont une extrémité est ancrée sur ledit fond.
- on immerge un premier module (1) constitué d'une plaque disposée horizontalement et apte à coulisser verticalement par rapport au dit câble (3,6).
- on place au fond de l'eau ce premier module calé horizontalement
- on dispose verticalement dans des cavités (7) ou sur des protubérances (8) réalisées au moins sur la face supérieure de ladite plaque (1), au moins deux modules (2) de second type constitué chacun d'un élément de paroi et comportant sur chacune de leur face horizontale au moins une protubérance (8) ou un évidement (7) compatible avec ceux de ladite plaque (1)
- on fait coulisser une deuxième plaque (1) le long du câble guide (3,6) et on l'immerge jusqu'à venir s'appuyer sur les éléments (2) de parois mis en place et formant entretoises, cette deuxième plaque comportant également au moins sur sa face horizontale supérieure des protubérances (8) ou des évidements (7) compatibles avec ceux d'autres éléments de parois (2).
- on continue la mise en place successivement d'éléments de parois verticales (2) et de plaques horizontales (1) les uns sur les autres jusqu'à constituer la hauteur du récif artificiel voulue
- on arrête au moins un câble guide (3,6) à la hauteur ainsi réalisée et on met ce câble sous tension pour constituer un tirant (3) solidarisant ainsi l'ensemble du récif constitué.

## Claims

1. Artificial reef, designed to be installed under water, consisting of two types of prefabricated modules (1, 2) that are assembled on top of one another by means of at least one vertical bar (3, 6), the first type (1) of module being formed by a plate intended to be horizontal and the second type (2) of module being formed by a wall element which is designed to be arranged vertically with at least one other vertical wall element between two horizontal plates (1), leaving between them at least one opening for at least one type of given fish to pass through, the whole unit being joined together by at least one vertical tie rod (3) which passes only through the horizontal plates and compresses the assembly.

2. Artificial reef according to claim 1, **characterised in that** the main faces of the plates (1) intended to be horizontal are planar and solid and some of them may include a vertical opening for allowing the passage of at least one type of given fish.

3. Artificial reef according to claims 1 or 2, **characterised in that** the plates (1) have a hexagonal contour.

4. Artificial reef according to any one of claims 1 to 3, **characterised in that** each plate (1) comprises at least on one surface intended to be horizontal and facing the top at least one protuberance (8) and or cut-out (7), the shapes of which are compatible with those found in the modules of the wall element (1) and are capable of fitting inside one another.

5. Artificial reef according to any one of the claims 1 to 4, **characterised in that** each plate intended to be horizontal (1) comprises at least one vertical hole for allowing the passage of a tie rod (3).

6. Artificial reef according to any one of claims 1 to 5, **characterised in that** each plate intended to be horizontal (1) comprises at least one cavity (10) on one of its lateral peripheral faces, in which an axle (9) is arranged which is designed to receive the end of a mobile ring the other end of which is designed to slide along a guide line (6).

7. Artificial reef according to any one of claims 1 to 6, **characterised in that** the vertical elements (2) have a rectangular cross section and extended shape the two end faces of which are inclined in relation to one another by an angle (α), such that two elements (2) arranged in extension of one another with their end faces (11) placed side by side form an angle of (180-α°).

8. Artificial reef according to claim 7, **characterised in that** the angle (180-α°) equals the angle β formed by two adjacent sides of a horizontal plate (1).

9. Artificial reef according to any one of claims 1 to 8, **characterised in that** the main faces intended to be vertical of the vertical elements (2) are solid.

10. Method of installing underwater an artificial reef consisting of two types of prefabricated modules (1, 2) that are able to be assembled on top of one another by means of at least one vertical tie rod (3, 6) **characterised in that**:
- on the base of the site where the artificial reef is to be installed at least one cable (6) is laid, one end of which is anchored to said base,
- a first module (1) is submerged consisting of a plate arranged horizontally and able to slide vertically in relation to said cable (3 6),
- said first module is placed at the bottom in the water oriented horizontally,
- at least two modules (2) of the second type, each consisting of an element of the wall and comprising on each of their horizontal faces at least one protuberance (8) or cut-out (7) that is compatible with those in the said plate (1), are arranged vertically in the cavities (7) or on the protuberances (8) formed at least on the upper face of the said plate (1),
- a second plate (1) is slid along the guide cable (3, 6) and is submerged until it bears against the elements (2) of the walls that are installed and form cross members, said second plate also comprising at least on its upper horizontal face protuberances (8) or cut-outs (7) that are compatible with those of other wall elements (2),
- the successive installation of elements of vertical walls (2) and horizontal plates (1) on top of one another is continued until the desired height for the artificial reef is achieved,
- at least one guide cable (3, 6) is fastened at the height thus obtained and said cable is put under tension to form a pull rod (3) thus joining together the assembly of the formed reef.

## Patentansprüche

1. Künstliches Riff, das dazu bestimmt ist, unter Wasser eingesetzt zu werden und aus zwei Arten von vorgefertigten Modulen (1, 2) zusammengesetzt ist, die mit Hilfe zumindest einer vertikal verlaufenden Stange (3, 6) aufeinander angeordnet sind, wobei eine erste Modulart (1) aus einer Platte aufgebaut ist, die horizontal verlaufen soll, und eine zweite Modulart (2) aus einem Wandelement aufgebaut ist, das mit zumindest einem weiteren vertikal verlaufenden Wandelement zwischen zwei horizontal verlaufenden Platten (1) senkrecht angeordnet werden soll, indem sie zwischen sich zumindest eine Öffnung freilassen, die den Durchtritt für zumindest eine gegebene Fischart freigibt, wobei die gesamte Einrichtung über zumindest einen vertikal verlaufenden Zuganker (3) verbunden ist, der nur durch die horizontal verlaufenden Platten tritt und die Einrichtung zusammendrückt.

2. Künstliches Riff nach Anspruch 1, **dadurch gekennzeichnet, dass** die Hauptflächen der Platten (1), welche horizontal verlaufen sollen, eben und voll ausgeführt sind, wobei bestimmte eine senkrecht verlaufende Öffnung aufweisen können, die den Durchtritt für zumindest eine gegebene Fischart freigibt.

3. Künstliches Riff nach Anspruch 1 oder 2, **dadurch gekennzeichnet, dass** die Platten (1) einen sechseckigen Umriss haben.

4. Künstliches Riff nach einem der Ansprüche 1 bis 3, **dadurch gekennzeichnet, dass** jede Platte (1) zumindest an derjenigen Fläche, die horizontal verlaufen und nach oben gerichtet sein soll, zumindest einen Vorsprung (8) bzw. eine Ausnehmung (7) aufweist, dessen/deren Formen mit denen zusammenpassen, welche die Wandelementmodule (1) aufweisen und ineinander gesteckt werden können.

5. Künstliches Riff nach einem der Ansprüche 1 bis 4, **dadurch gekennzeichnet, dass** jede Platte (1), die horizontal verlaufen soll, zumindest ein vertikal verlaufendes Loch aufweist, das den Durchtritt eines Zugankers (3) gestattet.

6. Künstliches Riff nach einem der Ansprüche 1 bis 5, **dadurch gekennzeichnet, dass** jede zum horizontalen Verlauf bestimmte Platte (1) an einer ihrer seitlichen Umfangsflächen zumindest eine Aufnahme (10) aufweist, in welcher eine Achse (9) angeordnet ist, die das Ende eines abnehmbaren Rings aufnehmen kann, dessen anderes Ende entlang eines Führungsstrangs (6) gleitbeweglich ist.

7. Künstliches Riff nach einem der Ansprüche 1 bis 6, **dadurch gekennzeichnet, dass** die vertikal verlaufenden Elemente (2) im Querschnitt rechteckförmig und von länglicher Gestalt sind, von der die beiden Endflächen mit einem Winkel (α) zueinander geneigt verlaufen, so dass zwei in Verlängerung zueinander angeordnete Elemente (2), deren Endflächen (11) aneinandergrenzen, einen Winkel von (180-α°) miteinander einschließen.

8. Künstliches Riff nach Anspruch 7, **dadurch gekennzeichnet, dass** der Winkel (180-α) gleich dem Winkel β ist, der von zwei benachbarten Seiten einer horizontal verlaufenden Platte (1) gebildet wird.

9. Künstliches Riff nach einem der Ansprüche 1 bis 8, **dadurch gekennzeichnet, dass** die zum senkrechten Verlauf bestimmten Hauptflächen der vertikal verlaufenden Elemente (2) voll ausgeführt sind.

10. Verfahren zur Unterwasserinstallation eines künstlichen Riffs, das aus zwei Arten von vorgefertigten Modulen (1, 2) zusammengesetzt ist, die mit Hilfe zumindest eines vertikal verlaufenden Zugankers (3, 6) aufeinander gesetzt werden können, **dadurch gekennzeichnet, dass**
- am Grund des Ortes, der mit dem künstlichen Riff ausgestattet werden soll, zumindest ein Seil (6) angeordnet wird, dessen Ende am Grund verankert wird,
- ein erstes Modul (1) versenkt wird, das eine horizontal angeordnete Platte aufweist und senkrecht zum Seil (3, 6) gleitbeweglich ist,
- dieses horizontal verkeilte erste Modul an den Gewässergrund gesetzt wird,
- in Hohlräumen (7) bzw. an Vorsprüngen (8), die zumindest an der Oberseite der Platte (1) ausgeführt sind, zumindest zwei Module (2) des zweiten Typs angeordnet werden, die jeweils ein Wandelement aufweisen und an ihrer horizontal verlaufenden Seite jeweils zumindest einen Vorsprung (8) bzw. eine Ausnehmung (7) aufweisen, der/die mit denen der Platte (1) zusammenpasst,
- entlang des Führungsseils (3, 6) eine zweite Platte (1) verschoben und soweit versenkt wird, bis sie an den eingesetzten, Verstrebungen bildenden Wandelementen (2) anliegt, wobei diese zweite Platte auch zumindest an ihrer horizontal verlaufenden Oberseite Vorsprünge (8) bzw. Ausnehmungen (7) aufweist, die mit denen von weiteren Wandelementen (2) zusammenpassen,
- weiterhin nacheinander vertikal verlaufende Wandelemente (2) und horizontal verlaufende Platten (1) aneinander gesetzt werden, bis die gewünschte Höhe des künstlichen Riffs erreicht ist,
- zumindest ein Führungsseil (3, 6) in der so erzeugten Höhe arretiert wird und dieses Seil unter Spannung gesetzt wird, um einen Zuganker (3) zu bilden, der **dadurch** das gesamte gebildete Riff festigt.
